# EUROPEAN PATENT APPLICATION

(11) **EP 2 316 916 A1**
(43) Date of publication of application: **04.05.2011**
(21) Application number: 09755119.6
(22) Date of filing: 22.05.2009
(51) Int. Cl.: C12H 1/07, C12H 1/04, B01D 35/16, B01D 35/02, B65D 47/34, G09F 23/04, G09F 23/06, G09F 25/00

(54) **DEVICE FOR TREATING AND PURIFYING A LIQUID PRODUCT AND THE UNITS OF SAID DEVICE**

(30) Priority: 29.05.2008 RU 2008121572
(71) Applicant: Obschestvo S Ogranichennoi Otvetstvennostiyu "Eurostandart", Moscow 107-497 (RU)
(72) Inventor: KISTEREV, Valeriy Evgenyevich, Moscow 105264 (RU); ZHERDEV, Pavel Dmitrievich, Moscow region 141021 (RU)
(74) Representative: Sonn & Partner Patentanwälte
(86) International application number: PCT/RU2009/000256
(87) International publication number: WO 2009/145670

(57) **Abstract**

The inventions relate to the food industry. Any liquid, vodka included, is treated and purified by forcing it through a mixture of sorbing components installed between filtering materials. Each portion of liquid poured out of the bottle into a drinking vessel within the period of time preceding its consumption by the user is treated and purified. Treatment is carried out by forcing the liquid from the container at an optimum rate through coarse filtering material, sorbents and fine filtering material installed in the cartridge under required air excess pressure in the container interior produced as needed by a motor driven air pump installed outside the bottle. By placing flavor and (or) other additives in the cartridge interior a new product different from the bottled one can be obtained at the device outlet. Besides, the device can be equipped with a sound effect unit and a light effect unit for advertising purposes.

## Description

The present invention relates to food industry including liquor industry.

The invention provides special purification and treatment of each single portion of liquid, including vodka, poured out from a bottle prior to be consumed by a user himself as well for making a new product differing from the original one.

There is a water treatment and purification device (see US Patent No. 6,136,188 dated 24.10.2000) that comprises a cartridge with a filter and an air supply unit consisting of a manual pump secured to the bottle and linked with a pipe connected to the bottle air supply unit.

The said device has the following disadvantages: it cannot be used for alcohol-containing liquids; it has a large-size cartridge installed in the liquid inside the container; it cannot be used when a container with liquid inside is turned neck down; the air supply unit is inconvenient for use.

The technical result of the inventions claimed is to overcome the said disadvantages by means of:
Provision of a small-size disposable special liquid treatment and purification device as well as making a new product differing from the original one; the new device is based on an electrically driven air pump to force liquid, including an alcohol-containing one, through the filtering materials, sorbents and other fillers with required parameters and to provide for a rate of liquid flow from the bottle into a drinking vessel to the satisfaction of the user;
Provision of a safety locking device that hermetically seals the vessel with a product during storage and transportation to the point of consumption and thus prevents premature wetting of cartridge filling materials with liquid, and automatically opens when the product is poured out for the first time;
Provision of a convenient energy-saving control box as well as a light effect unit and a sound effect unit to advertise the device and the liquid contained in it at points of sale and points of consumption.
Provision of a simple switch that switches on at the moment the bottle is turned neck down to pour the product into a drinking vessel and switches off when the bottle returns to its original position for consumption ease and battery life saving.

The said result is achieved by furnishing the liquid treatment and purification device that comprises a filtering cartridge and an air supply unit with a spout and a body secured to the container neck connected with each other. The body incorporates a cartridge hermetically coupled with the container interior by means of the sealing element and an electrically driven and battery backed up pump coupled with the unit that supplies air into the container and electrically connected with the control box secured to the body.

The spout can be connected with the body by means of threads with a locking latch and it can be made of transparent material. The upper portion of the spout has the form of a streamer nose with a dissector-arrester at the outlet.

The cartridge is secured with respect to the body and the spout, thus limiting the outage of the liquid forced out from the cartridge by residual excess pressure.

The device can be equipped with a locking cap that hermetically closes the spout outlet and is connected with it by means of threads with first opening indication.

The cartridge body consists of hermetically interconnected lower and upper elements, the upper element has a latticed disk-shaped portion and the lower element has two cylindrical sections; one of which contains fillers and the other one can be connected with a sealing element hermetically coupled with the neck internal surface.

Some filler layers can be installed in the lower element and at least one filler layer is fixed between the upper edge of the lower element side cylindrical wall and the latticed portion of the upper element.

A disk-shaped lattice is installed in one section of the cartridge body lower element to provide for uniform distribution of liquid throughout the entire interior of the cartridge as well as for adjustment of filler volume within the cartridge.

The cartridge body can be filled with coarse filtering materials, sorbent and fine filtering material installed in series.

Nonwoven fabric made of natural or synthetic fiber in the form of a disk set is used as coarse and fine filtering materials. Cotton fibers are used as natural fibers and polypropylene fibers are used as synthetic fibers.

Nonwoven or woven fabric made of activated carbon fiber in the form of a disk set is used as sorbent.

Cartridge body can be filled with filtering material, flavoring agents, and/or mineral and/or flavor additives and/or vitamin additives and/or coloring agents and/or structurizing agents and/or optimizers and/or ionizing agents and filtering material.

The device can comprise a valve mounted in the sealing element to provide for communication-separation of the cartridge and the container. The aforementioned valve has two interconnected coaxial cylinders or axial passages. The valve has also an annular piston installed between the coaxial cylinders and two or more pistons installed in the passages of the sealing element providing for restricted longitudinal movement with respect to the sealing element.

Air can be supplied into the container through the hole in the body connected with the air pump, through the body passage in communication with the space limited by coaxial cylinders of the sealing element or its passages and by sealing element slots. The body passage can be made in the form of a radial deepening limited by the lower section of the cartridge.

The body is connected with the bottle neck by means of threads with a locking latch in the form of hooks on the internal surface of the body or by means of a header with a locking latch.

The control box consists of a switch and a gravity circuit breaker on the magnetically operated sealed switch with a magnet. The circuit breaker is series-connected with the switch and installed in the body.

The device can be additionally equipped with an advertising light effect unit installed in the body containing LEDs, light-dependent resistor, electronic switches, a board with a controller and batteries and a sound effect unit containing PROM, audio-frequency amplifier, dynamic speaker and batteries.

The control box switch is mounted onto the body and can interact with a rotary ring that is also installed on the body.

The device can be equipped with a first switching-on indicator in the form of a body element entering into the slot of the rotary ring that breaks when the rotary ring is moved for the first time. The device can consist of an external decorative metal portion and internal process plastic portion. A decorative ring can be put on the lower visible section of the body.

The device with an air supply unit, control elements and electronic units can be covered with a transparent protective cover.

The device in the second modification can be equipped with a piston-type valve installed in the second cylindrical section of the cartridge lower element. The movement of the valve is limited to axial direction. The sealing element has a cylinder with longitudinal projections on the internal surface that come in contact with the second cylindrical section of the cartridge lower element forming passages in communication with the pump via a hole in the body.

The device in the third modification has a sealing element with a cylinder having longitudinal passages that are in communication with the pump via a hole in the body; the valve is petal-type.

The passages formed by the projections of the sealing element and by the second cylindrical section of the cartridge lower element or made in the sealing element cylinder can be in communication with a hole in the body via a passage formed in the body and limited by the cartridge lower element.

There exists a locking device comprising a sealing element secured to the neck of the container filled with liquid and a valve (see Patent BE902997 dated 18.11.1985).

The disadvantage of the said locking device lies in the fact that it cannot be used in the liquid treatment and purification device, especially vodka, because its design does not provide a filtering cartridge.

The technical result to be achieved by using the claimed embodiments of the locking device is to overcome the said disadvantages.

In the first embodiment of the locking device the technical result is achieved through an arrangement in which the sealing element consists of two interconnected coaxial cylinders. The valve has an annular piston installed between the coaxial cylinders providing for restricted longitudinal movement with respect to them, and for communication of the space limited by the internal cylinder with the container and the filtering cartridge under air pressure.

The passage formed by the cylinders of the sealing element can be in communication with an electrically driven small-size air pump installed outside the container.

In the second embodiment of the locking device, the technical result is achieved through an arrangement in which the sealing element has passages and a valve with pistons installed in the passages of the sealing element providing for restricted longitudinal movement, and for communication of the space limited by the sealing element with the container and the filtering cartridge under air pressure.

The passages of the sealing element can be in communication with an electrically driven small-size air pump installed outside the container.

In the third embodiment of the locking device, the technical result is achieved through an arrangement in which the sealing element comprises a cylinder with longitudinal projections on the internal surface that come in contact with the cylindrical section of the filtering cartridge to form passages that are in communication with the compressed air apparatus. The valve is made in the form of a piston installed in the cylindrical section of the cartridge that provides for restricted axial movement and for communication of the latter with the container.

In the fourth embodiment of the locking device, the technical result is achieved through an arrangement in which the sealing element comprises a cylinder with longitudinal passages in communication with the compressed air apparatus and a petal-type valve that is secured within the sealing element cylinder providing for communication of container with the filtering cartridge.

The air supply unit in the third and fourth embodiments can be made in the form of a small-size electrically-driven air pump installed outside the container.

At present there are various widely known light and sound units, but they are not used in the liquid treatment and purification devices because it is difficult to position them on the device.

The technical result to be achieved by the claimed advertising units is to overcome the said disadvantage.

When using the first advertising unit for the liquid treatment and purification device, the technical result is achieved through an arrangement in which it comprises batteries, light-dependent resistor, which is adjusted to a certain illumination level and controls the energizing electronic switch, timer and clock frequency generator with a commutator, which control electronic switches of LEDs with different emission bands installed in the body of the device on the container under the filtering cartridge.

When using the second advertising unit for the liquid treatment and purification device, the technical result is achieved through an arrangement in which it contains a power switch, batteries, ROM speech synthesizer, audio-frequency amplifier and dynamic speaker located in the body of the device secured to the container under the filtering cartridge.

We know various electrical equipment control units for liquid supply devices (see Japan patents No. 2003-267465 dated 25. 09. 2003 and No. 09-122564 dated 13.05. 1997).

The disadvantage of the said devices lies in eventual inadvertent actuation of the motor as the switch is not protected from being accidentally pressed on.

The technical result to be achieved by the inventive electrical equipment control unit is to overcome the aforementioned disadvantage.

The technical result is achieved through an arrangement in which the electrical equipment control unit of liquid treatment and purification device comprises a switch and a rotary ring, which communicates with it by means of the rests installed on the device body.

The control box can be equipped with a gravity circuit breaker on the magnetically operated sealed switch with a magnet connected in series with the switch installed in the device body.

The character of the invention is illustrated by annexed drawings.

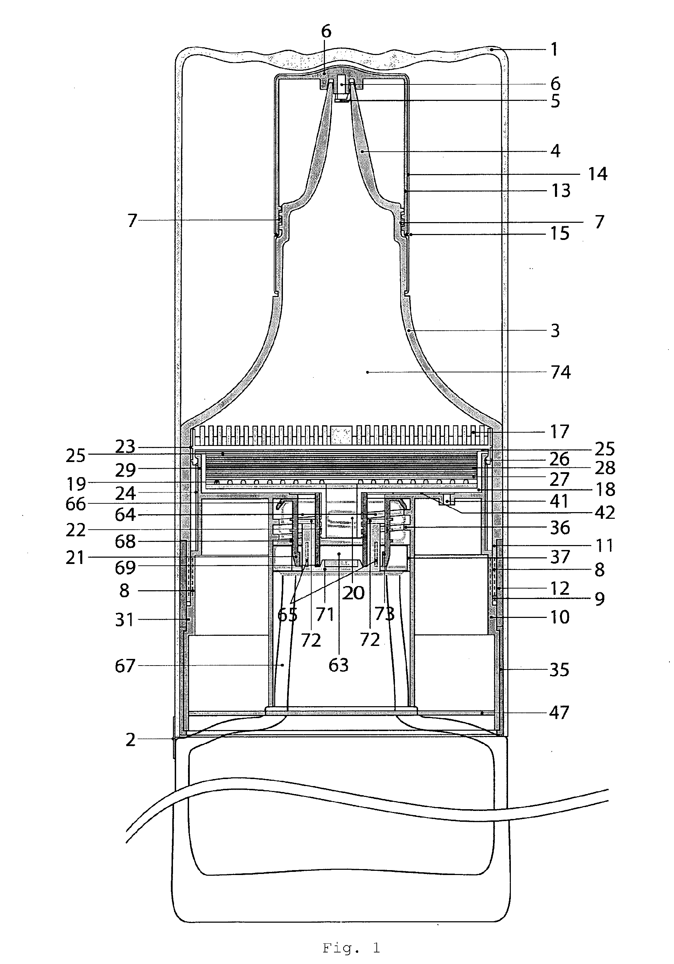

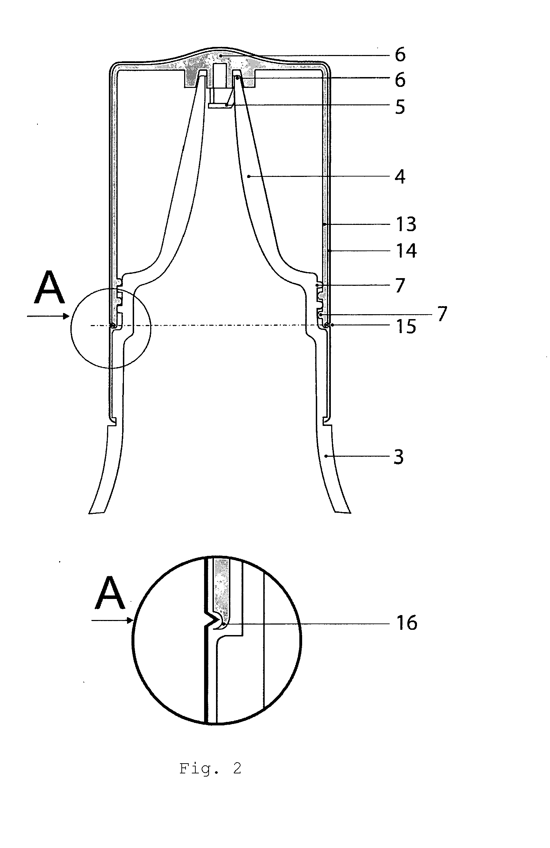

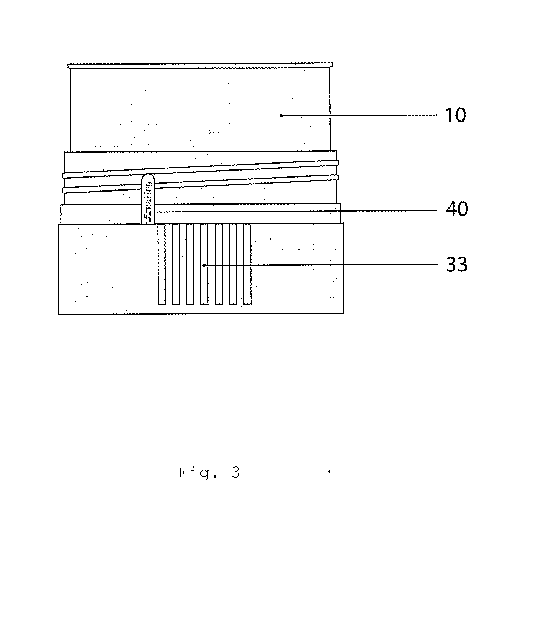

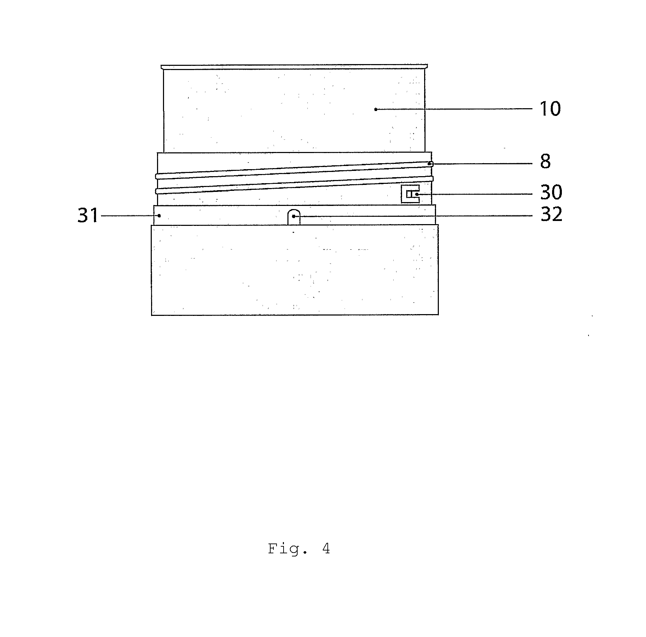

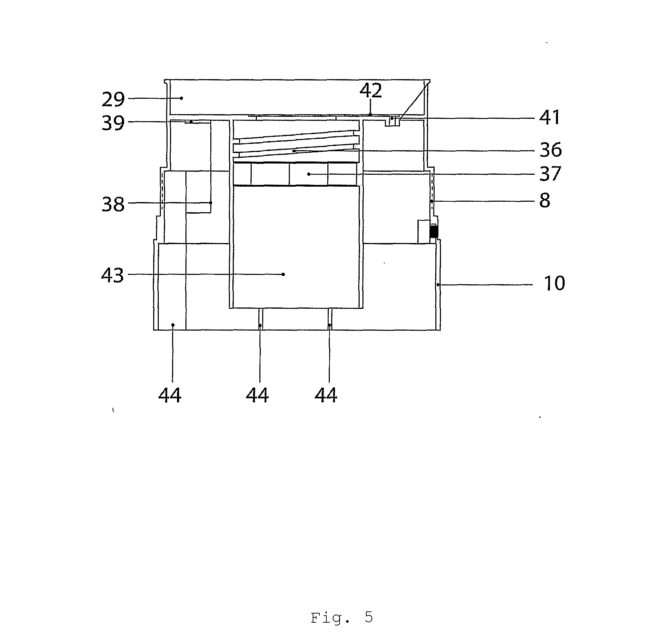

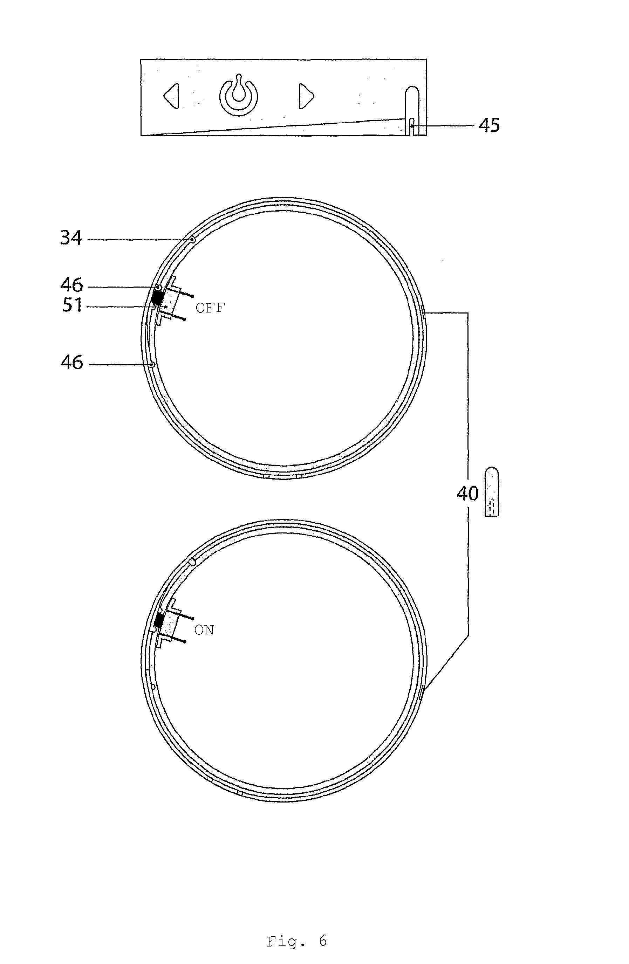

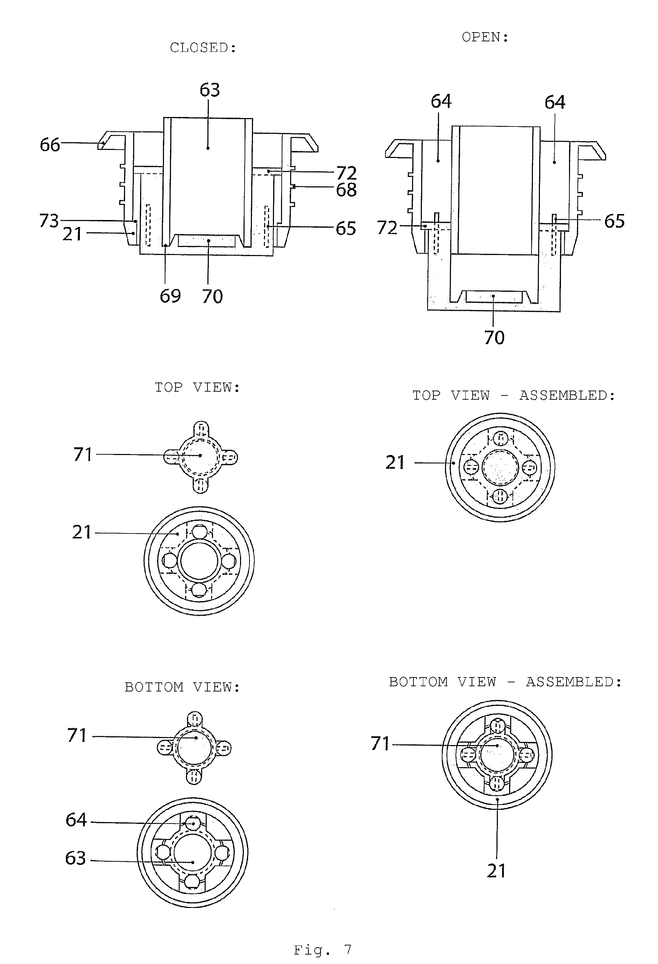

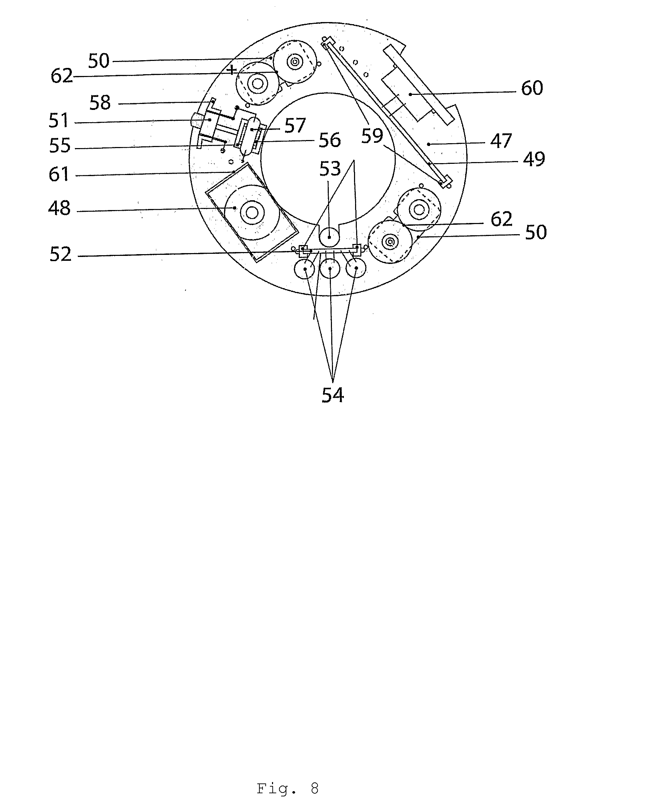

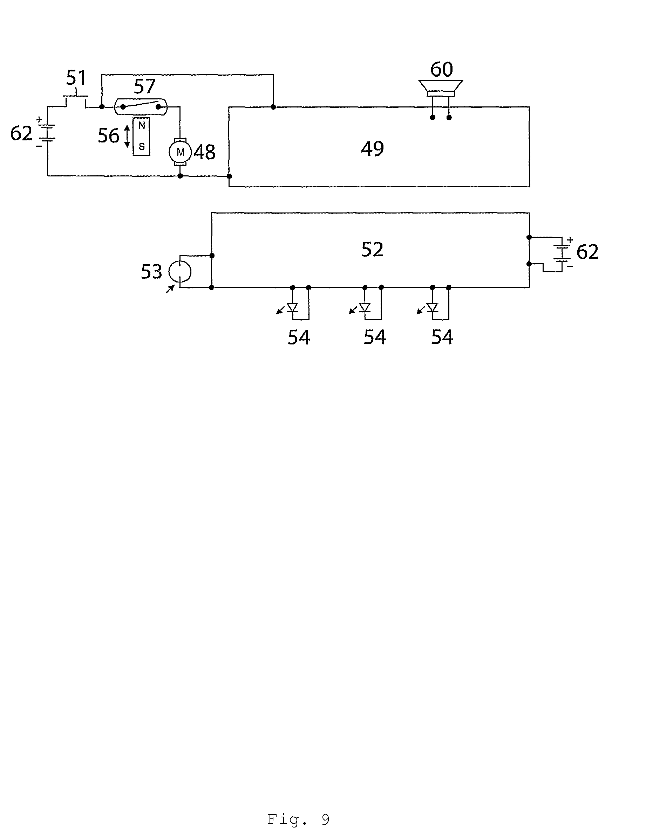

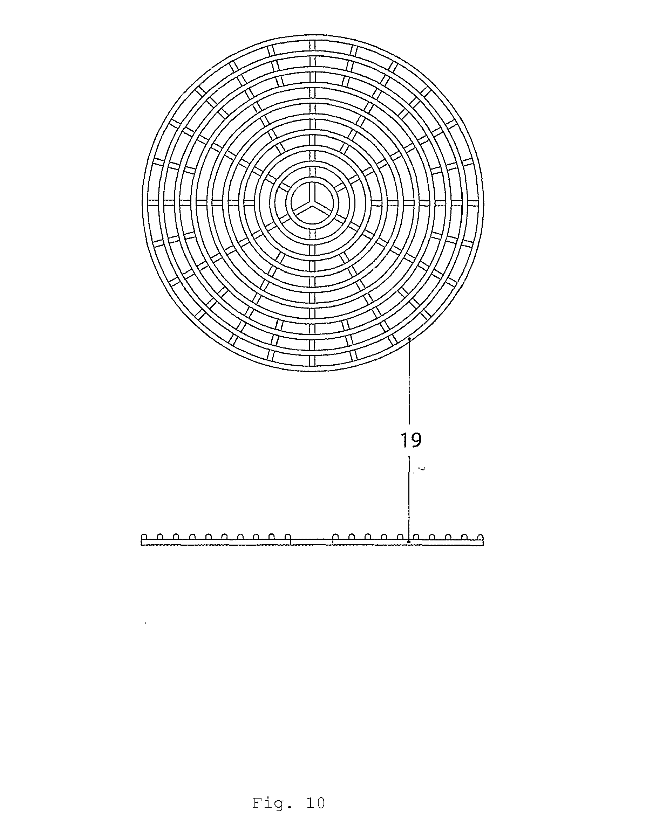

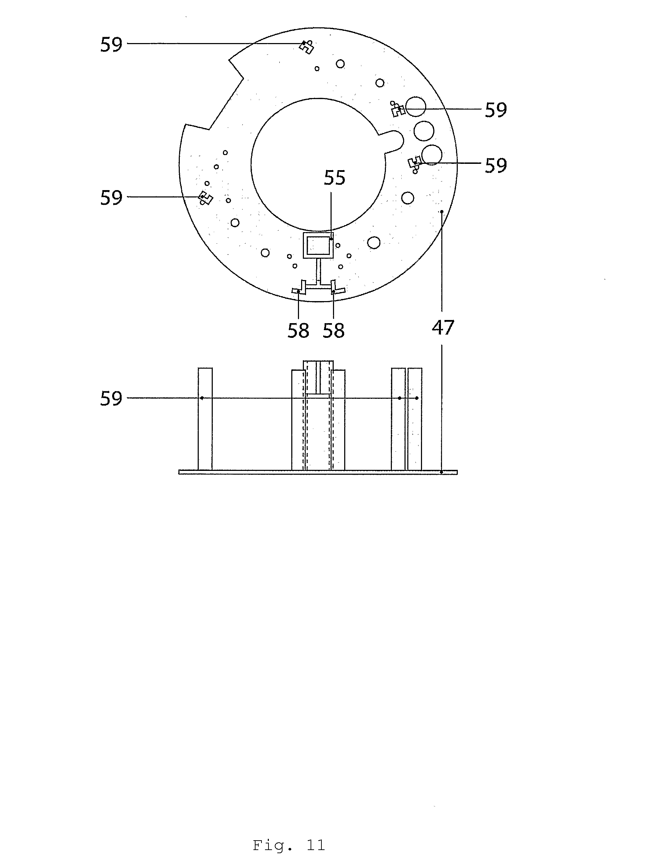

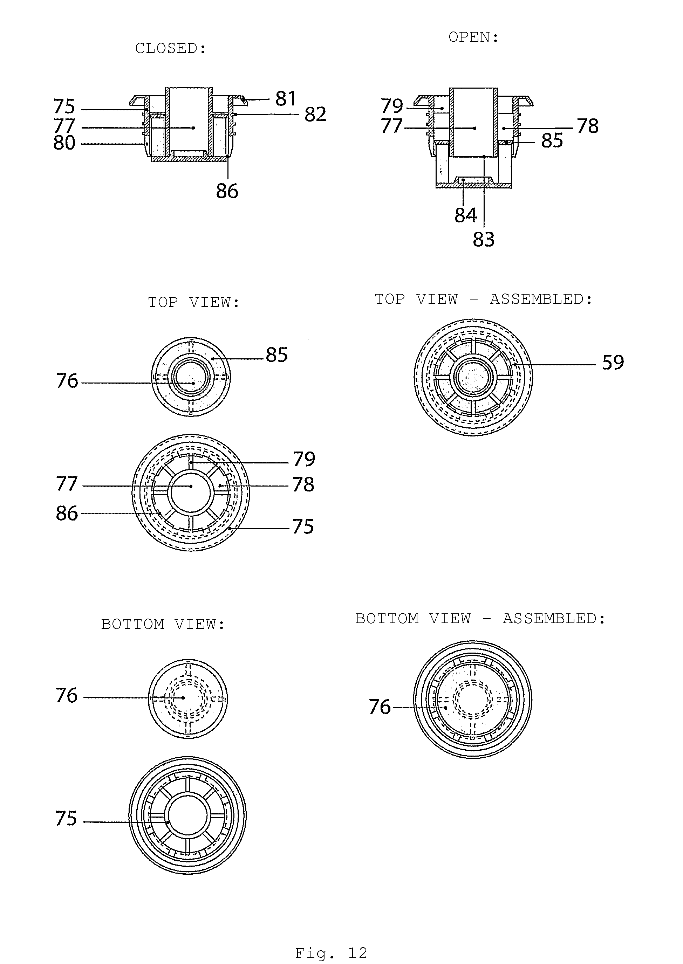

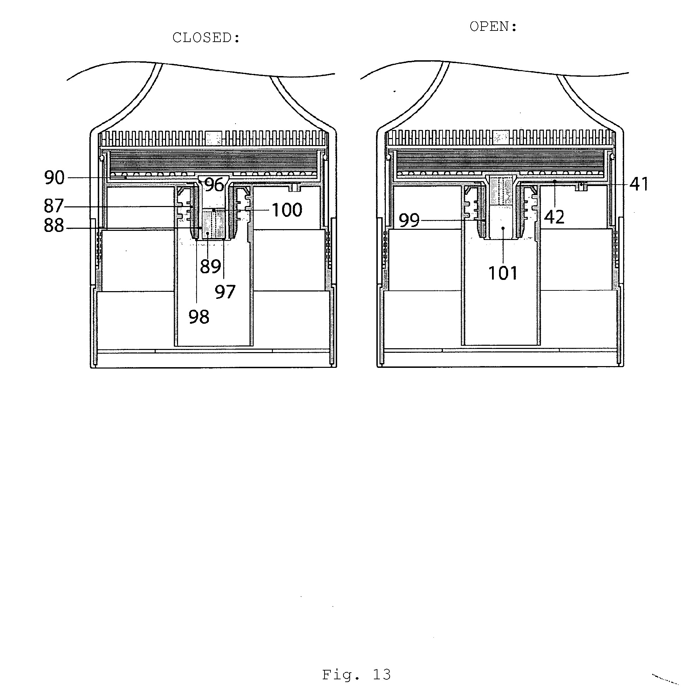

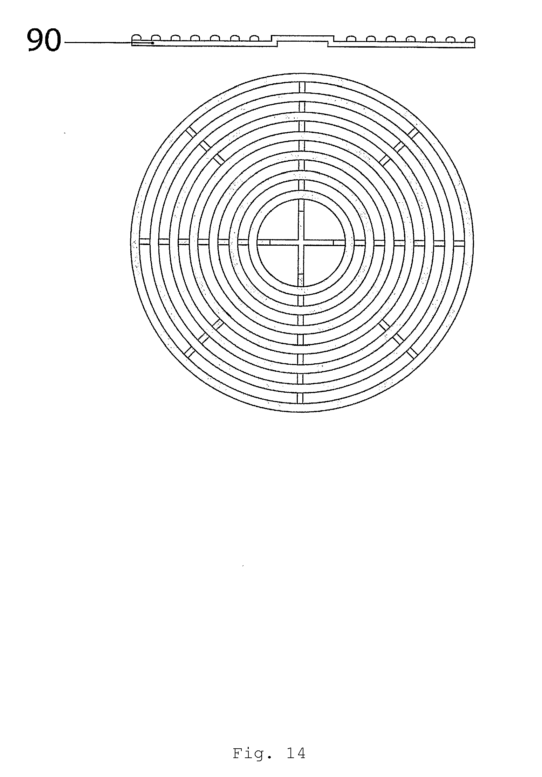

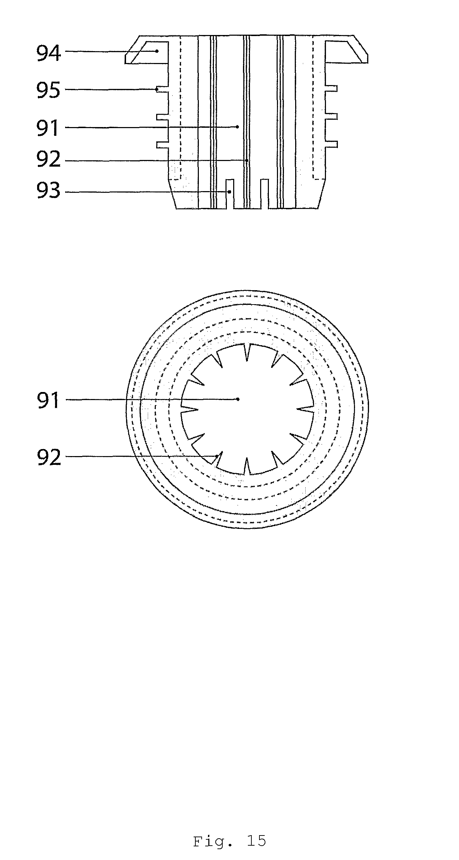

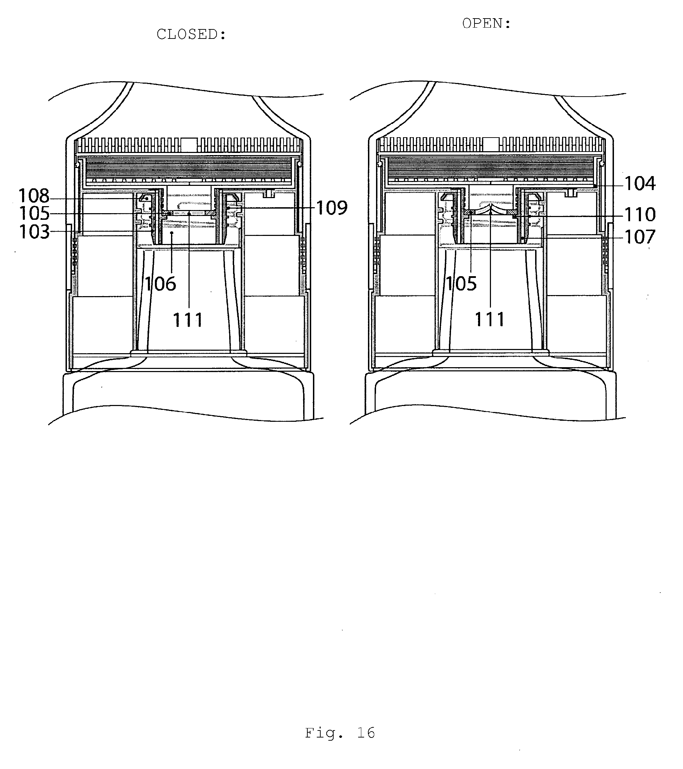

Fig. 1 is a layout view of the bottled liquid treatment and purification device; Fig. 2 shows a neck with a cap; Fig. 3 shows a body with slots for sound transmission; Fig. 4 shows a body with a locking latch and a hole for a switch; Fig. 5 shows a body sectional view; Fig. 6 shows a control box; Fig. 7 shows two positions of the valve with several pistons and its elements with respect to the sealing element; Fig. 8 shows the arrangement of various units on the mounting plate inside the body; Fig. 9 shows electrical schematics of light and sound units and of control box; Fig. 10 shows a disk-shaped lattice; in Fig. 11, mounting plate is shown; Fig. 12 shows two positions of the valve with an annular piston and its elements with respect to the sealing element; in Fig. 13, the second embodiment of the valve in two positions is shown; Fig. 14 shows the design of a disk-shaped lattice for the second embodiment of the valve; Fig. 15 shows the sealing element design with the second embodiment of the valve; in Fig. 16, the third embodiment of the valve is shown.

The device comprises the following components: a protective cap; a neck with a locking cap; a cartridge with a cavity for corresponding fillers; a device body; a rotary ring; a mounting plate with an air pump secured to it and with a motor and other electronic components; a sealing element with a check valve; a liquid container - a bottle.

The decorative cap 1 is made of a transparent material and is secured to the device with a scotch tape 2.

The neck 3 made of transparent material has the following configuration: a narrow neck with a spout 4 is formed in the upper section with a dissector-arrester 5 of the liquid to be poured out, as well as a seat to provide for leakproof capping of the entire product with elements 6 of the locking cap; the neck below the spout has double threads 7 to connect the neck with the locking cap; the internal surface of the neck lower wide portion has threads 8 with a locking vertical recess 9 to connect the neck with the body 10, its external surface has a seat 11 for a rotary ring 12. A two-component locking cap consists of internal plastic section 13 and external decorative metal section 14. The cap is coupled with the neck by means of double threads with consequent rolling of the decorative cap lower section over the neck and folding with cutting along the line 15. The lower edge 16 serves as the first opening indicator of the internal plastic cap which enters into the external cap slot at the first opening and cannot be removed any more. The device is recapped by screwing the detachable portion of the cap on the neck against the stop to guarantee leakproof capping. For this purpose the plastic cap internal side surface has threads 7. The internal surface in the center of cap plastic portion 13 has a seat 6 to provide for safe leakproof connection with the neck spout.

The cartridge is installed in the lower wide section of the neck cavity as if under a transparent cover. The cartridge consists of an upper element 17, a lower element 18 and disk-shaped lattice 19. The cartridge interior is filled with correspondent materials. The upper element of the cartridge is a cover made of flexible material with a latticed disk-shaped section for treated liquid to pass through. The lower element of the cartridge is a single element consisting of two cylindrical sections with different diameters. A disk-shaped lattice 19 is installed on the bottom of the cartridge lower element in its wide upper section. The bottom has a hole 20 in the center for liquid flow. Lattice 19 provides for liquid even distribution along the entire filtering material as well as for the adjustment of cartridge filtering volume. The narrow portion of the cartridge lower element 18 is connected with the sealing element 21. The external wide surface of the cartridge narrow lower element 18 lower section has extruded annular sealing bands 22 to provide for leakproof connection with the sealing element. Cartridge assembly is inserted into the device body against the rest with a strict fit tolerance and is secured to the neck by means of seal bands 23 engirding its upper element in circumferential direction. The sealing bands provide for leakproof connection of the cartridge with the neck inner surface. The gap formed under the cartridge upper element 17 between the neck internal surface and the external surface of the body visible part is designed for cartridge label 24. The external side and butt surfaces of the cartridge lower element 18 wide portion hermetically couple with internal side and butt surfaces of the body 10 by means of tight elastic clamp. The cartridge lower element 18 with lattice 19 filled with corresponding materials is inserted into the cartridge upper element 17 against the stop and is firmly secured. The upper layer 25 of fine filtering material with diameter equal to the internal diameter of the cartridge upper element and external diameter of the cartridge lower element is firmly clamped between the butt surface of the cartridge lower element cylinder wall and internal butt surface of the cartridge upper element to avoid edge leaking effect. The side internal surface of cartridge upper element 17 has an annular latch 26 for elastic fitting on the retention ring of body 10. The cartridge cavity contains the following layers: coarse filtering material 27; sorbents and (or) other fillers 28 and fine filtering material 25.

The device body 10 is made of hard material. The body upper section has a seat 29 for a cartridge. On the external side surface in the centre there are threads 8 and a locking latch 30 to prevent neck unscrewing, a seat 31 for the rotary ring 12, a through-hole 32 for a switch button, vertical slots 33 for sound transmission and turning angle limiters 34 of the rotary ring. The seat for the rotary ring with turning angle limiters provides for its free movement within the limits required for device switching on and switching off. The body lower portion can have a metal decorative ring 35 with horizontal cuts for sound transmission. The internal surface of the internal cylindrical portion of body 10 has threads 36 and a locking sprocket 37 for connection with the bottle neck. Bottle collar bosses and sprocket 37 prevent unscrewing. The body internal space, between the external and central cylinder walls, comprises battery compartments 38 with spring jumpers 39. On the body external side within the rotary ring area, there is a detachable element 40 of the first switching-on indicator that breaks when the user switches on the device for the first time. In the proposed embodiment, when the rotary ring is fitted upon the device body, the breakable element is partially installed in the rotary ring slot and its upper portion creeps upon the rotary ring from its external side. The body upper butt wall has a through-hole 41 with a seat for connection with the air pump outlet adaptor, and the external butt surface from the cartridge side has a radial passage 42 to supply air to the bottle. Passage 42 connects the vertical through-hole for the pump with the central hole 43 in the internal cylinder of body 10. Body 10 can have strengthening ribs 44.

The rotary ring is freely fitted upon the body upper portion. The ring front has indications of directions for device switching on and off. The lower portion of the rotary ring has a slot 45 that makes the detachable element of the indicator break during the first switching on of the device (ring turning). On the inside of the rotary ring there are corresponding projections 46 enabling to press the switch and fix it in positions "ON" and "OFF" when the ring is turned. The rotary ring 12 can consist of two portions: external decorative and internal process portions.

The mounting plate 47 is at the bottom inside the device body. The following elements are installed and secured to the mounting plate: motor driven air pump - compressor 48, sound effect board 49, battery contacts 50, switch 51, light effect board 52, light-dependent resistor 53, LEDs 54. On the mounting plate there is also a well 55 for gravity switch magnet 56. The well bottom is on the level of the mounting plate base. From above the well is covered with a piece of foam rubber or polypropylene, which provides for the required distance to magnetically operated sealed switch 57 and absorbs magnet beats against the switch. The magnetically operated sealed switch is installed above the well 55 in the U-shaped deepening. The rest 58 of switch 51 is a board element and is installed in front of the gravity switch well. Battery contacts 50 are secured to the plate. The light effect unit board and the sound effect unit board fixing guide rails 59 are mounting plate elements. The light effect unit comprises LEDs and light-dependent resistor to be installed in proper holes on the mounting plate as well as the light effect board with a command processor. The sound effect board contains PROM, sound synthesizer, audio-frequency amplifier and dynamic speaker 60. The mounting plate has a cut for the dynamic speaker. The pump and the compressor motor are wrapped with a gasket 61 to reduce vibration. Two independent sets 62 of standard batteries provide power supply to the device.

The sealing element 21 with a central hole 63 is designed to provide leak tightness between the bottle neck, the device body and the cartridge as well as to supply pressure air from the compressor into the bottle; when assembled with the valve it forms an automatic pneumatic locking device. The sealing element can have the configuration of a cylinder with a central hole 63 and longitudinal air passages inside its element of cylinder 64 to supply air into the bottle. The air passages in the inward lower portion have air cuts 65. On the element upper portion there is a seat 66 for butt fitting of bottle neck 67, the external surfaces of the element cylindrical portion have seal bands 68 to provide for leakproof coupling with the bottle neck internal surface. In the lower portion of the central hole the sealing element has a seat 69 for leakproof connection with the central portion (cork) 70 of the valve 71.

The valve 71 can have a cork connected with pistons 72 to be inserted into the air passages of the sealing element.

Automatic pneumatic locking device is open when pressure air from the compressor is supplied into air passages 64. In the open position the valve is held in the sealing element and does not fall out. It hangs under the sealing element on its pistons 72, which are held in the air passages partially cut from below by means of elastic forces on internal projections 73 formed inside the passages. When the valve is open, air passes inside the bottle through the vertical air passages of the sealing element and through the cuts 65 in them; the liquid from the bottle is poured though the gap formed between the surface of the valve central portion and the surface of the seat in the lower portion of the sealing element central hole and its central hole 63.

The device shown in Fig. 1-11 that provides for invention implementation operates as follows.

During the transportation and storage of the device in the packing box, power is supplied only to the light effect advertising unit, and the device control box is switched off. When the device is taken out of the box, where it is dark, and is placed on the showcase for sale, where it is light, the light effect unit is actuated. If illumination is sufficient to activate the light-dependent resistor, the electronic switch controlled by the light-dependent resistor closes the power supply circuit and the LEDs on the device start blinking in accordance with the timer program attracting the attention of potential consumers. In the present example the LEDs are placed in such a way as to highlight the liquid in the glass bottle, its bottom and the reverse side of the glass bottle back label. The light effect unit is in active mode only if the room where the device is exposed is bright enough and until the unit batteries are exhausted. To use the device, take it in hand, unstick the scotch tape that holds the protective cap, remove the cap and open by unscrewing the locking cap. To make the product come out of the device, the latter is to be switched on by the rotary ring. The rotary ring 12 moves to the side indicated thereupon thus breaking the first switching on indicator 40 with cut 45; the flat surface of projection 46 slides over the pushbutton of switch 51 switching it thus energizing the control box. After reaching limiter 34 in the device body, the rotary ring is fixed therein by projections 46. Then the device is turned neck down above the drinking vessel to be filled. The liquid in the bottle moves to the check valve 71, the magnet 56 moves along the well 55 to magnetically operated sealed switch 57, the contacts of the magnetically operated sealed switch are closed under the action of magnetic field closing compressor 48 motor power supply circuit. Pressure air is supplied from the pump outlet via through-hole 41 and body radial passage 42 into vertical air passages 64 in the sealing element 21 and forces out check valve pistons 72 connected with its central portion 70 thus opening the central hole 63 in the sealing element. When the valve pistons descend below the beginning of slots 65 of the air passages, the compressed air starts coming into the bottle interior pressurizing it. When the valve is open, the liquid from the bottle comes to the coarse filtering material 27 in the cartridge through the central hole 63 in the sealing element. Part of it under gravity passes through it and comes into the cavity of cartridge 29 filled with sorbents and other additives 28 that provide for defined treatment parameters. After passing through the sorbent, the liquid initially will not manage to pass through fine filtering material 25 due to large total resistance in the cartridge filler. But as the compressor increases the pressure in the bottle, the liquid gets through the filtering materials and fillers thus being filtered and treated. When the container to be filled is full, the user turns the bottle neck up. Under gravity, the magnet rolls down to the well bottom, the contacts of the magnetically operated sealed switch open, the compressor stops, the liquid stops coming into the bottle but still residual excess pressure remains therein, that is why another small portion of liquid will be forced out from the cartridge cavity into the free space (volume) 74 of the neck above it. Excess air is discharged into the ambient space though the open spout of the neck. The configuration of the spout and the dissector-arrester provides for elimination of splashes caused by pressure relieve. The locking cap is screwed on the neck upper portion and seals the device hermetically. The device is de-energized by rotating the ring 12 back. A small amount of liquid that remains above the cartridge gradually flows back into the bottle under gravity. The advertising sound effect unit can be connected both to the sound effect unit power supply circuit and to the device operational circuit to be closed by the magnetically operated sealed switch. In the described embodiment it is connected to the control box power supply circuit, i.e. when the rotary ring is moved (switch 51 is ON), the sound unit is turned on and a corresponding background sound or speech is heard from the dynamic speaker depending on PROM firmware.

The procedure is repeated, if required.

In the present embodiment of the device arrangement a pneumatic locker shown in Fig. 12 can be used. It consists of a sealing element 75 and a valve 76. The sealing element can be configured as a double-wall cylinder with a central hole 77 and longitudinal cylindrical air passage 78 to supply air into the bottle. The air passage is formed by the walls of the element external and internal cylinders connected with ribs 79. There are air slots 80 in the lower portion of the element of the external cylinder. In the upper portion of the element there is a seat 81 for butt fitting onto the bottle neck 67. On the external surface of the element cylindrical portion there are seal bands 82 to provide for leakproof coupling with the internal surface of the bottle neck. In the lower portion of the central hole the sealing element has a seat 83 to provide for leakproof connection with the central portion (a cork) 84 of the valve 76.

The valve 76 has a cork connected with annular piston 85 to be inserted into the air passage of the sealing element.

In the open position the valve is held in the sealing element and does not fall out. It hangs under the sealing element on piston 85, which is held in the cylindrical air passage by elastic forces on internal projections 86. When the valve is open, the air passes inside the bottle through the air passage 78 of the sealing element and through the cuts 80 in its external wall. The liquid is poured from the bottle through the gap formed between the surface of the valve central portion 84 and the seat surface in the lower portion of the sealing element central hole and through its central hole 77.

The operation of the device equipped with an automatic pneumatic stopper shown in Fig. 12 is similar to the above example.

The second embodiment of the stopper arrangement is shown in Fig. 13 - 15. It has a different valve which requires another configuration of the cartridge lower element and disk-shaped lattice.

The stopper consists of the following components: a sealing element 87, a cartridge lower element 88, a piston 89 and a disk-shaped lattice 90. The sealing element can be configured as a cylinder with a central hole 91 and longitudinal projections 92 formed on its internal surface to provide for air passages. The lower portion of the element of cylinder has air slots 93. The upper portion of the element has a seat 94 for the bottle neck butt fitting. On the external surface of the element cylindrical portion there are seal bands 95 to provide for leakproof coupling with the internal surface of the bottle neck. The lower cylindrical portion of the cartridge lower element passes into the butt wall of its cavity butt wall with deviation from the central axis forming a cross-section widening 96 of the hole for liquid to flow out. At the bottom of the element lower portion there is an internal ring-shaped shoulder 97 to prevent piston 89 from falling out and an external process ring-shaped shoulder 98 to hold the sealing element during device assembling. When assembled, the external surface of the cartridge lower element lower portion and the internal surface of the sealing element form longitudinal air through-passages 99 for pressure air supply into the container. When assembling, the piston 89 is inserted into the lower portion of the cartridge lower element from above into ring-shaped shoulder 97 against the stop. In the central portion of the disk-shaped lattice 90 there is some space for piston head 100 to move into the cartridge above the widening area of the cartridge lower cylindrical portion.

In the open position the piston is held in the cartridge by elastic forces. Its head 100 is in the widening area of the cartridge lower cylinder and does not hamper liquid passage from the container into the cartridge cavity through the hole 101. When the valve is open, the compressed air passes into the bottle through the hole 41, the air passages 42, the air passages 99 of the sealing element and the slots 93 in its external wall. The liquid is poured from the bottle through central hole 101 in the cartridge lower element.

The operation of the device with an automatic pneumatic stopper shown in Fig. 13 - 15 is similar to the above example.

The third embodiment of the stopper arrangement is shown in Fig. 16.

In this embodiment the automatic pneumatic stopper consists of the following components: the sealing element 103, the cartridge lower element 104 and the self-closing petal valve 105, which closes the central hole of the sealing element. The sealing element can be configured as a cylinder with a central hole 106 and longitudinal air passages 107 formed inside the element of cylinder to supply air into the bottle. In the upper portion of the sealing element there is a seat 108 for bottle neck 67 butt fitting. On the external surface of the element cylindrical portion there are seal bands 109 for leakproof coupling with the internal surface of the bottle neck. In the middle of the sealing element central hole there is a seat 110 for petal valve 105.

The valve 105 can be a membrane with a system of slots 111 made of material with required elastic rigidity. The valve is inserted into the central hole of the sealing element 106 and clamped in seat 110 with the cartridge lower element 104.

The stopper of the third embodiment operates in the following way.

With the valve is open, the compressed air passes into the bottle through the hole 41, the air passage 42, vertical air passages 107 of the sealing element, hereupon the bottle is pressurized; the liquid deforms the membrane, its petals open and the product enters the cartridge cavity for treatment.

The operation of the liquid treatment and purification device with the stopper in the third embodiment is similar to the above example.

While illustrative and presently preferred embodiments of the invention have been described in detail herebefore, it is to be understood that the inventive concepts can be otherwise variously embodied and employed and that the appended claims are intended to be construed to include such variants.

## Claims

1. A liquid treatment and purification device that comprises a cartridge with fillers and an air supply unit wherein a spout and a body secured on the container neck connected with each other are provided. The body comprises a cartridge with fillers that is in communication with the container interior via a stopper; and an air supply unit, which is a motor driven pump, and batteries in communication with the air supply unit and electrically connected with the control box secured to the body.

2. A device according to claim 1 wherein the neck is connected with the device body by means of threads and a locking latch.

3. A device according to claim 1 wherein the cartridge is fixed with respect to the body and the neck, thus limiting the volume for the liquid to be forced out from the cartridge by residual pressure.

4. A device according to claim 1 wherein the neck is made of transparent material with the upper portion in the form of a streamer nose with a dissector-arrester in the spout hole.

5. A device according to claim 1 wherein a check cap is provided that hermetically closes the neck spout and is connected with it by means of threads with first opening indication.

6. A device according to claim 1 wherein the cartridge body consists of hermetically interconnected lower and upper elements; the upper element is made in the form of a cover with a latticed disk-shaped portion and the lower element has two cylindrical portions with a central hole; the upper portion comprises fillers and the lower portion can be connected with the container neck to provide for communication of cartridge interior with the container interior.

7. A device according to claim 6 **characterized in that** it has a multilayer filler, a part of filler layers is installed in the lower element of the cartridge body and at least one filler layer is secured between the upper edge of the cartridge body lower element side cylindrical wall and the latticed portion of the upper element.

8. A device according to claim 6 wherein a disk-shaped lattice is provided in the lower portion of the cartridge body lower element to provide uniform liquid distribution along the entire cartridge interior as well as to adjust the filler volume in the cartridge.

9. A device according to claim 1 wherein the cartridge filler consists of coarse filtering materials, sorbent and fine filtering material located in series.

10. A device according to claim 9 wherein nonwoven fabric made of natural or synthetic fiber is used as coarse and fine filtering materials in the form of a disk set.

11. A device according to claim 10 wherein cotton fibers are used as natural and polypropylene fibers are used as synthetic fibers.

12. A device according to claim 9 wherein nonwoven or woven fabric made of activated carbon fibers is used as sorbent in the form of a disk set.

13. A device according to claim 1 wherein the cartridge filler consists of a filtering material, flavoring agents, and/or mineral and/or flavor additives and/or vitamin additives and/or coloring agents and/or structurizing agents and/or optimizers and/or ionizing agents

14. A device according to claim 1 wherein the air supply unit is formed by a hole in the device body that is connected with the pump and is in communication with container interior through the passage formed in the body via the container neck.

15. A device according to claim 14 wherein the passage in its body is radial and is limited by the cartridge lower element.

16. A device according to claim 1 wherein the stopper incorporates a valve installed in the cartridge lower element or in the sealing element for communication/separation of cartridge interior and container interior when pressure air is supplied therein.

17. A device according to claim 1 wherein the stopper incorporates a valve in the form of a piston capable of a limited axial movement and installed in the lower cylindrical portion of the cartridge lower element; the sealing element has a cylinder with longitudinal projections on the internal surface that come in contact with the said lower cylindrical portion of the cartridge lower element forming air passages that are in communication with the pump through the passage and the hole in the device body.

18. A device according to claim 1 wherein the stopper incorporates a sealing element with two coaxial cylinders or passages and a valve with an ring piston or at least two pistons installed between the coaxial cylinders or in passages, correspondingly, to provide for restricted longitudinal movement with respect to them for communication of the container interior with the cartridge interior under the action of pressure air coming from the pump to the pistons.

19. A device according to claim 16 wherein the sealing element has a cylinder with longitudinal passages connected with the pump through the passage and the body hole, and the cutout valve is of petal self-closing type.

20. A device according to claim 1 wherein the body is connected with the container neck by means of threads with a locking latch in the form of hooks on the internal surface of the body.

21. A device according to claim 1 wherein its body is connected with the container neck by means of a header with a locking latch.

22. A device according to claim 1 wherein the pump control box is equipped with a switch and a gravity circuit breaker on magnetically operated sealed switch with a magnet installed in the body and connected in series.

23. The device according to claim 21, different that it is supplied by the indicator of the first opening in the form of an element of the case entering into a cut in a rotary ring and a rotary ring breaking at the first shift.

24. The device according to claim 22, different that the rotary ring consists of an external decorative metal part and an internal technological plastic part.

25. A device according to claim 1 wherein a decorative ring is put on the lower visible portion of the device body.

26. A device according to claim 1 wherein it is covered with a transparent protective cap connected with the container.

27. The advertising unit for the liquid treatment and purification device according to any of claims 1-26 wherein it consists of batteries, light-dependent resistor adjusted to a certain illumination level that controls an energizing electronic switch, a timer and a clock frequency generator with a switchboard that control the operation of electronic switches of LEDs with different emission bands installed in the device body under the cartridge.

28. The advertising unit for the liquid treatment and purification device according to any of claims 1-26 wherein it comprises an on/off switch, batteries, a speech synthesizer with ROM, an audio-frequency amplifier and a dynamic speaker installed in the body of the device under the cartridge.

29. The control box for the liquid treatment and purification device according to any of claims 1-26 wherein it comprises a rotary ring with rests installed on the device body to provide for interaction with the switch.
